# EUROPEAN PATENT APPLICATION

(11) **EP 2 602 750 A1**
(43) Date of publication of application: **12.06.2013**
(21) Application number: 11814754.5
(22) Date of filing: 02.08.2011
(51) Int. Cl.: G06Q 10/00, G01C 21/00, G06F 17/30, G08G 1/005

(54) **ACTION CHARACTERISTIC EXTRACTION DEVICE, ACTION CHARACTERISTIC EXTRACTION SYSTEM, METHOD OF EXTRACTING ACTION CHARACTERISTIC, AND ACTION CHARACTERISTIC EXTRACTION PROGRAM**

(30) Priority: 04.08.2010 JP 2010174960
(71) Applicant: NEC Corporation, Tokyo 108-8001 (JP)
(72) Inventor: OHNO, Takeo, Tokyo 108-8001 (JP)
(74) Representative: Robson, Aidan John
(86) International application number: PCT/JP2011/068004
(87) International publication number: WO 2012/018131

(57) **Abstract**

Relevance between a stay location and a behavior type of a user is extracted from position information history.

A behavior pattern storing unit 202 stores stay point information 212 for a plurality of stay points including a stay point of a first behavior base type corresponding to a first behavior type and a stay point of a second behavior base type corresponding to a second behavior type. A behavior characteristic extraction unit 302 extracts days on which a stay at a stay point of the first behavior base type was performed as a day regarding the first behavior type by referring the stay point information 212, calculates, in the case that a stay at an other stay point different from the stay points of the first and the second behavior base type was performed on days regarding the first behavior type, a stay frequency at the stay point of the first behavior base type during the same time zone as the stay at the other stay point, for the days regarding the first behavior type, and determines a degree of relevance between the other stay point and the first behavior type.

## Description

### Technical Field

The present invention relates to a behavior characteristic extraction device, a behavior characteristic extraction system, a behavior characteristic extraction method and a behavior characteristic extraction program which extracts characteristic information about user's behavior.

### Background Art

In recent years, by a terminal equipped with a GPS (Global Positioning System), it becomes possible to acquire user's position information periodically. As a service using such position information, for example, services such as displaying a map around the user or showing the way from the present location to the destination are provided. These services are provided based on the present position information of the user. Also, as a further advanced service, it is proposed to extract the user's behavior pattern based on the history of the user's position information, and provide the service based on the extracted behavior pattern.

For example, in patent literature 1, a situation estimation device which defines a situation transition model for behavior states (sleeping, at work, out of office and so on) and estimates a present situation of a user from position information and time information is disclosed.

In order to provide the service which matches the behavior state of the user, it is effective to know a role regarding respective stay locations. In particular, information indicating whether the stay location is relevant to work or not is important because it has a large influence on the behavior state of the user.

In the situation estimation device disclosed in patent literature 1, the user needs to input information on the role regarding the respective stay locations (such as home area and work area), that is, information on user's behavior types (such as private and work) relevant to the respective stay locations. However, inputting the relevant behavior types for the respective stay locations imposes heavy burden on the user. Also, it is necessary, for a business operator who provides services to the user, to provide the services on the presumption that the behavior types already inputted for the stay locations may not be updated or may be inaccurate.

A method, in which the behavior types relevant to the respective stay locations are inputted by the user, but the behavior types relevant to the respective stay locations are extracted automatically, is disclosed in patent literature 2, for example.

A behavior history analysis device disclosed in patent literature 2 estimates user's private relevant places and business relevant places based on a user's working time zone, noise level, and illumination intensity level in the surroundings.

### [Citation List]

### [Patent Literature]

[Patent Literature 1] Japanese Patent Application Laid-Open No. 2009-181476
[Patent Literature 2] Japanese Patent Application Laid-Open No. 2009-043057

### Summary of Invention

### [Technical Problem]

In the behavior history analysis device described in patent literature 2 mentioned above, there is a problem that information on illumination intensity or noise and information on the user's working time zone, as information other than the position information, are needed in order to classify whether a stay location is a private relevant place or a business relevant place.

An object of the present invention is to provide a behavior characteristic extraction device, a behavior characteristic extraction system, a behavior characteristic extraction method and a behavior characteristic extraction program which can extract relevance between the stay location and the behavior type of the user from a position information history.

### [Solution to Problem]

A behavior characteristic extraction device according to an exemplary aspect of the invention includes behavior pattern storing means for storing stay point information including a stay point identifier which indicates a stay point, a stay start date and time, and a stay end date and time, for each of stays of a user at a plurality of stay points including a stay point of a first behavior base type corresponding to a first behavior type and a stay point of a second behavior base type corresponding to a second behavior type, and behavior characteristic extraction means for extracting one or more days on which a stay at a stay point of the first behavior base type was performed as a day regarding the first behavior type by referring the stay point information acquired from the behavior pattern storing means, calculating, in the case that a stay at an other stay point different from the stay points of the first and the second behavior base type was performed on the one or more days regarding the first behavior type, a stay frequency at the stay point of the first behavior base type during the same time zone as a time zone during which the stay at the other stay point was performed, for the one or more days regarding the first behavior type, and determining and outputting a degree of relevance between the other stay point and the first behavior type based on the calculated stay frequency.

A behavior characteristic extraction method according to an exemplary aspect of the invention includes storing stay point information including a stay point identifier which indicates a stay point, a stay start date and time, and a stay end date and time, for each of stays of a user at a plurality of stay points including a stay point of a first behavior base type corresponding to a first behavior type and a stay point of a second behavior base type corresponding to a second behavior type, extracting one or more days on which a stay at a stay point of the first behavior base type was performed as a day regarding the first behavior type by referring the stay point information, calculating, in the case that a stay at an other stay point different from the stay points of the first and the second behavior base type was performed on the one or more days regarding the first behavior type, a stay frequency at the stay point of the first behavior base type during the same time zone as a time zone during which the stay at the other stay point was performed, for the one or more days regarding the first behavior type, and determining and outputting a degree of relevance between the other stay point and the first behavior type based on the calculated stay frequency.

A computer readable storage medium according to an exemplary aspect of the invention, records thereon a behavior characteristic extraction program, causing a computer to perform a method including storing stay point information including a stay point identifier which indicates a stay point, a stay start date and time, and a stay end date and time, for each of stays of a user at a plurality of stay points including a stay point of a first behavior base type corresponding to a first behavior type and a stay point of a second behavior base type corresponding to a second behavior type extracting one or more days on which a stay at a stay point of the first behavior base type was performed as a day regarding the first behavior type by referring the stay point information, calculating, in the case that a stay at an other stay point different from the stay points of the first and the second behavior base type was performed on the one or more days regarding the first behavior type, a stay frequency at the stay point of the first behavior base type during the same time zone as a time zone during which the stay at the other stay point was performed, for the one or more days regarding the first behavior type, and determining and outputting a degree of relevance between the other stay point and the first behavior type based on the calculated stay frequency.

### [Advantageous Effect of Invention]

An effect of the present invention is to be able to extract the relevance between the stay location and the behavior type of the user from the position information history.

### Brief Description of Drawings

[Fig. 1] A block diagram showing a characteristic configuration according to a first exemplary embodiment of the present invention.
[Fig. 2] A block diagram showing a configuration of a behavior characteristic extraction system 1 according to the first exemplary embodiment of the present invention.
[Fig. 3] A flow chart showing position information acquisition processing of a terminal 100 according to the first exemplary embodiment of the present invention.
[Fig. 4] A flow chart showing behavior pattern extraction processing of a behavior pattern extraction device 200 according to the first exemplary embodiment of the present invention.
[Fig. 5] A flow chart showing behavior characteristic extraction processing of a behavior characteristic extraction device 300 according to the first exemplary embodiment of the present invention.
[Fig. 6] A diagram showing an example of stay point information 212 according to the first exemplary embodiment of the present invention.
[Fig. 7] A diagram showing stay time lengths at an office stay point for respective time zones according to the first exemplary embodiment of the present invention.
[Fig. 8] A diagram showing an example of relevance degree information 312 according to the first exemplary embodiment of the present invention.
[Fig. 9] A diagram showing an example of an expression to calculate a degree of relevance (a stay frequency at the office stay point) according to the first exemplary embodiment of the present invention.
[Fig. 10] A flow chart showing behavior characteristic extraction processing of the behavior characteristic extraction device 300 according to a second exemplary embodiment of the present invention.
[Fig. 11] A diagram showing an example of the stay point information 212 according to the second exemplary embodiment of the present invention.
[Fig. 12] A diagram showing an example of a periodic pattern of working days according to the second exemplary embodiment of the present invention.
[Fig. 13] A diagram showing stay time lengths at the office stay point for respective time zones according to the second exemplary embodiment of the present invention.
[Fig. 14] A diagram showing an example of the relevance degree information 312 according to the second exemplary embodiment of the present invention.
[Fig. 15] A diagram showing an example of an expression to calculate a degree of relevance according to the second exemplary embodiment of the present invention.

### Description of Embodiments

First, a behavior pattern data 211 and a life behavior model according to the exemplary embodiment of the present invention will be described.

In a behavior characteristic extraction system 1 according to the exemplary embodiment of the present invention, a terminal 100, which moves together with a user, acquires position information periodically. And a behavior pattern extraction device 200 extracts stay point information 212 as the user's behavior pattern data 211 based on the acquired position information. The stay point information 212 is information on stay points (locations) where the user visited and stayed.

Next, the user's life behavior model is defined as follows.

It is assumed that the user's behavior is classified into at least two behavior types such as "work" (the first behavior type) and "private" (the second behavior type). And it is assumed that, at a stay point of a behavior base type corresponding to each behavior type, the user performs behavior belonging to the corresponding behavior type, such that at a stay point of an office (the first behavior base type), behavior belonging to the "work" (the first behavior type) is performed and at a stay point of a home (the second behavior base type), behavior (private life) belonging to the "private" (the second behavior type) is performed. For example, the user's behavior is classified into two behavior types of "work" and "private", and the user works at a stay point of an office (an office stay point) and has a private life at a stay point of a home (a home stay point).

Here, it can be estimated that, concerning a day on which the user stayed at the office stay point (a working day (a day regarding the first behavior type)), "other stay point different from the office stay point and the home stay point", at which the user stayed during a time zone with high stay frequency at the office stay point, has high possibility of relevance with work.

### (First exemplary embodiment)

Next, a first exemplary embodiment of the present invention will be described.

According to the first exemplary embodiment of the present invention, it is assumed that the first behavior type is "work", the first behavior base type corresponding to the first behavior type is "office", the second behavior type is "private", and the second behavior base type corresponding to the second behavior type is "home". That is, the user's behavior is classified into two behavior types, "work" and "private", and the user works at the office stay point and performs private behavior at the home stay point. The behavior characteristic extraction system 1, concerning a user's working day (a day on which a stay was performed at the office stay point (the stay point of the first behavior base type) (a day regarding the first behavior type)), in the case that a stay at an other stay point different from the office stay point and the home stay point (stay points of the first and the second behavior base type) is performed, calculates a stay frequency at the office stay point (the stay point of the first behavior base type) during the same time zone as the time zone during which the stay at the other stay point is performed and determines a degree of relevance between the other stay point and the "work" (the first behavior type).

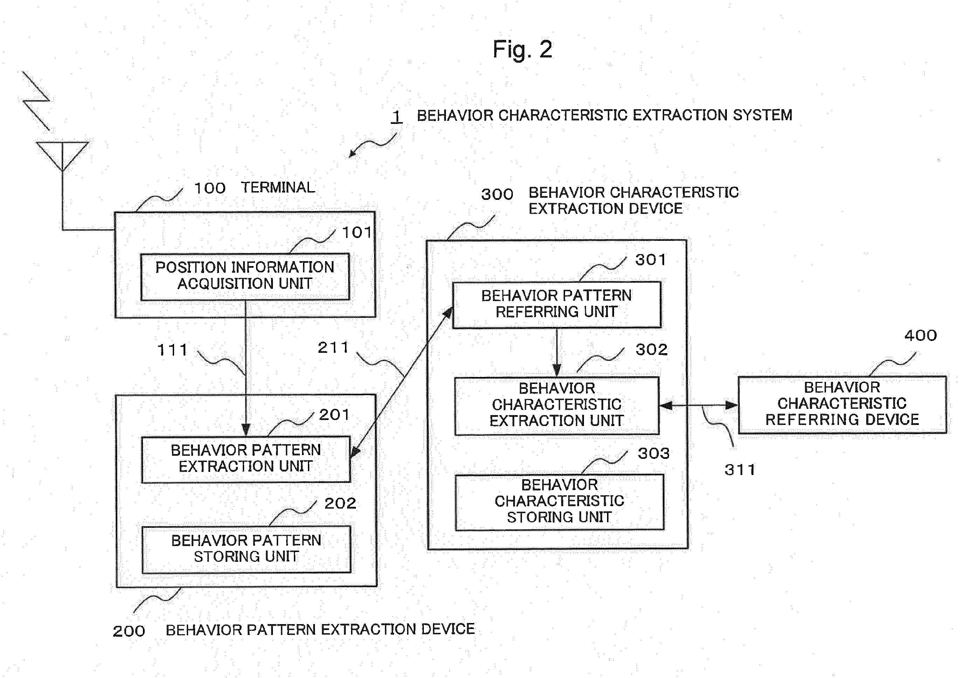

First, a configuration according to the first exemplary embodiment of the present invention will be described. Fig. 2 is a block diagram showing a configuration of the behavior characteristic extraction system 1 according to the first exemplary embodiment of the present invention.

Referring to Fig. 2, the behavior characteristic extraction system 1 includes the terminal 100, the behavior pattern extraction device 200, a behavior characteristic extraction device 300 and a behavior characteristic referring device 400. The terminal 100 and the behavior pattern extraction device 200, the behavior pattern extraction device 200 and the behavior characteristic extraction device 300, and the behavior characteristic extraction device 300 and the behavior characteristic referring device 400, are connected by a network which is not illustrated and can communicate each other.

The terminal 100 is an information terminal movable together with the user. According to the exemplary embodiment of the present invention, the terminal 100 is a cellular phone. Further, the terminal 100 may not be a cellular phone but be an information terminal such as a PDA (Personal Data Assistant), a personal computer and a car navigation system terminal, for example. Although only one terminal 100 is indicated in Fig. 2, plural terminals 100 may be included. The terminal 100 acquires position information of the terminal 100 and outputs it as position information data 111.

Here, the terminal 100 includes a position information acquisition unit 101. The position information acquisition unit 101 acquires, using GPS, position information of the terminal 100. The terminal 100 includes an antenna and receives a radio wave sent from a GPS satellite which is not illustrated. The position information acquisition unit 101 calculates a position (positioning point) of the terminal 100 based on the radio wave received from the satellite. Also, the position information acquisition unit 101 acquires a positioning time at the same time with calculating the positioning point. The positioning point calculated by the position information acquisition unit 101 is used as the position of the terminal 100.

Note that, the position information acquisition unit 101 may acquire the positioning point not by the GPS but from information on a position of a RFID (Radio Frequency IDentification) reader allocated at specific locations (such as stores), which is given to the reader, for example. Also, the position information acquisition unit 101 may acquire the positioning point by estimating a movement distance of the terminal 100 by an acceleration sensor or a magnetic field sensor. Also, the position information acquisition unit 101 may acquire other information which is relevant to the positioning point, such as positioning accuracy, at the same time with calculating the positioning point.

The position information acquisition unit 101 calculates the positioning point periodically and sends the position information data 111 including the position information which indicates the position of the positioning point, the positioning time and the positioning accuracy information to the behavior pattern extraction device 200. A time interval with which the position information acquisition unit 101 calculates the positioning point may be set by an administrator or a user to the position information acquisition unit 101 in advance. Also, the position information of the positioning point may be indicated on a predetermined coordinate axis or indicated with the latitude and the longitude.

The behavior pattern extraction device 200 extracts the behavior pattern data 211 of the terminal 100 based on the position information data 111.

Here, the behavior pattern extraction device 200 includes a behavior pattern extraction unit 201 and a behavior pattern storing unit 202.

The behavior pattern extraction unit 201 receives the position information data 111 from the terminal 100, and extracts the stay point information 212 as the behavior pattern data 211 of the terminal 100, based on the position information data 111 received. Here, the behavior pattern extraction unit 201 determines one of positions of a plurality of positioning points acquired during a predetermined time as the stay point, based on the position information data 111, in the case that the positions are included within a predetermined range, for example.

Also, the behavior pattern extraction unit 201 stores the extracted behavior pattern data 211 in the behavior pattern storing unit 202, for each of the terminal 100. Further, the behavior pattern extraction unit 201 sends the behavior pattern data 211 to the behavior characteristic extraction device 300.

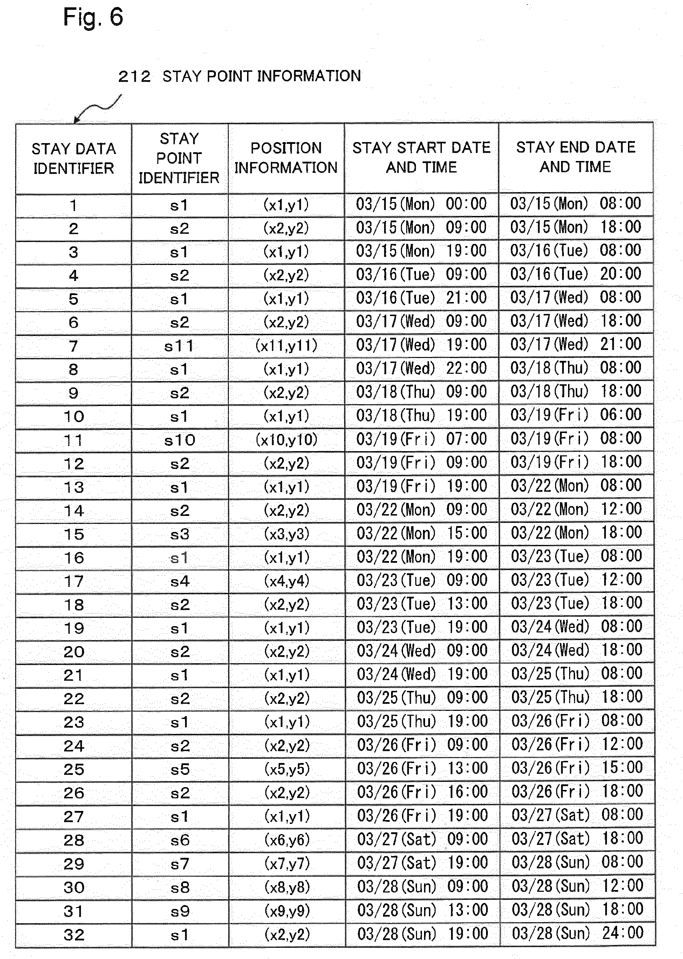

Fig. 6 is a diagram showing an example of the stay point information 212 according to the first exemplary embodiment of the present invention. The stay point information 212 includes a stay data identifier for identifying data for each stay (stay data), stay point identifiers s 1 to s11 for identifying a stay point for the stay, position information for the stay point, and a stay start date and time and a stay end date and time for the stay. Here, the stay point identifier is given to each extracted stay point by the behavior pattern extraction unit 201.

The behavior characteristic extraction device 300 generates a behavior characteristic data 311 of the terminal 100 based on the behavior pattern data 211.

Here, the behavior characteristic extraction device 300 includes a behavior pattern referring unit 301, a behavior characteristic extraction unit 302, and a behavior characteristic storing unit 303.

The behavior pattern referring unit 301 receives the behavior pattern data 211 from the behavior pattern extraction device 200.

The behavior characteristic extraction unit 302, concerning user's working days, in the case that a stay at an other stay point different from the office stay point and the home stay point is performed, calculates a stay frequency at the office stay point during the same time zone as the time zone during which the stay at the other stay point is performed, and determines a degree of relevance between the other stay point and work. The behavior characteristic extraction unit 302 stores the degree of relevance as relevance degree information 312 in the behavior characteristic storing unit 303. Further, the behavior characteristic extraction unit 302 sends the behavior characteristic data 311 including the relevance degree information 312 to the behavior characteristic referring device 400.

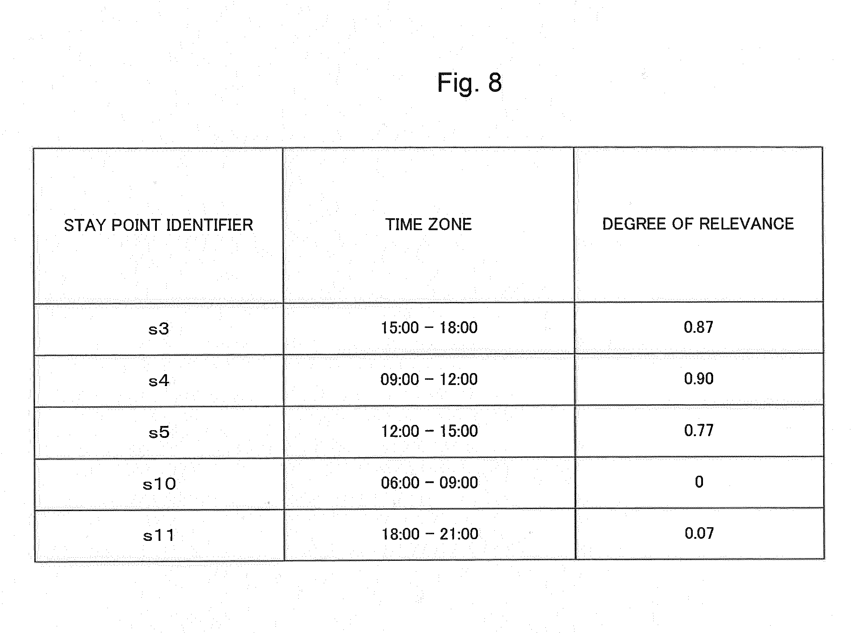

Fig. 8 is a diagram showing an example of the relevance degree information 312 according to the first exemplary embodiment of the present invention. The relevance degree information 312 includes the degree of relevance with work for each stay point.

The behavior characteristic referring device 400 is a server on which applications using the user's behavior characteristic data 311 operate. Here, any application can be applied as far as the application uses user's behavior characteristic data 311. For example, the application may be the application which provides an advertisement delivery service and so on based on the relevance degree information 312 included in the behavior characteristic data 311.

Further, the terminal 100, the behavior pattern extraction device 200, the behavior characteristic extraction device 300, and the behavior characteristic referring device 400 may be computers which operate according to a program, respectively. In this case, the terminal 100, the behavior pattern extraction device 200, the behavior characteristic extraction device 300, and the behavior characteristic referring device 400 include a storing unit, a processing unit, an input/output unit, and a communication unit which are not illustrated, and these are connected electrically by a common bus. The storing unit includes a ROM (Read Only Memory), a RAM (Random Access Memory), a flash memory and so on, and stores a program and data for realizing functions of each device. The processing unit includes a CPU (Central Processing Unit), and realizes the functions of each device by reading the program in the storing unit and by performing processing. The input/output unit includes an LCD (Liquid Crystal Display), a keyboard, a mouse, a speaker and so on, and is an input/output interface with the administrator of each device. The communication unit performs wireless communication or wired communication, and communicates with other devices. In this way, the terminal 100, the behavior pattern extraction device 200, the behavior characteristic extraction device 300, and the behavior characteristic referring device 400 are realized.

Note that, in the behavior characteristic extraction system 1 according to the first exemplary embodiment of the present invention, the behavior characteristic extraction device 300 is a different device from the terminal 100, the behavior pattern extraction device 200, and the behavior characteristic referring device 400. However, the behavior characteristic extraction device 300 and one or plural of the terminal 100, the behavior pattern extraction device 200, and the behavior characteristic referring device 400 may compose one device. For example, the behavior pattern extraction device 200 and the behavior characteristic extraction device 300 may compose one device. Also, each component of the behavior characteristic extraction device 300 may be allocated to different locations physically, and it may be connected via a network. Also, instead of the behavior pattern extraction device 200 including the behavior pattern storing unit 202, the behavior characteristic extraction device 300 may include the behavior pattern storing unit 202. In other words, the configuration of the behavior characteristic extraction system 1 shown in Fig. 2 is an example, and the components included in each of the terminal 100, the behavior pattern extraction device 200, the behavior characteristic extraction device 300, and the behavior characteristic referring device 400 can be changed flexibly.

Next, an operation of the behavior characteristic extraction system 1 according to the first exemplary embodiment of the present invention will be described.

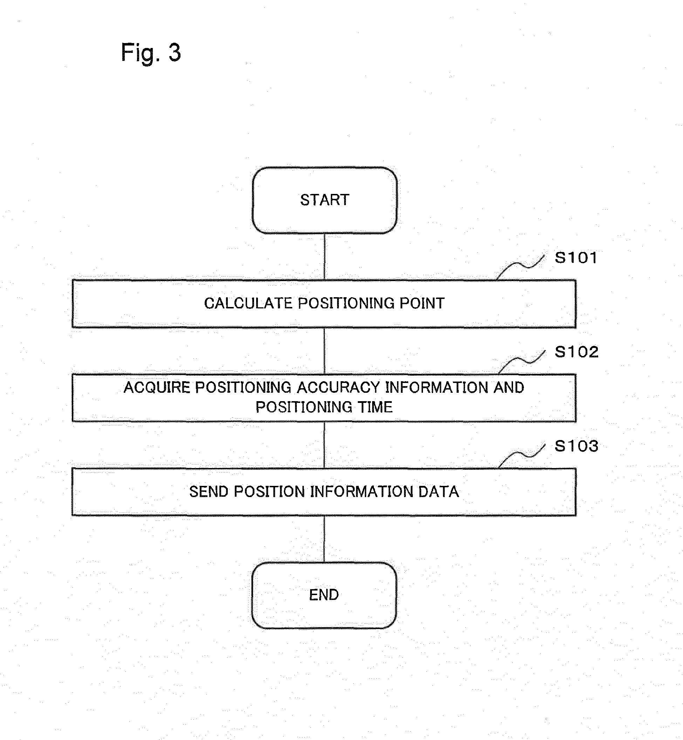

First, an operation of the terminal 100 according to the first exemplary embodiment of the present invention will be described. Fig. 3 is a flow chart showing position information acquisition processing of the terminal 100 according to the first exemplary embodiment of the present invention.

The position information acquisition unit 101 of the terminal 100 receives a radio wave from the satellite and calculates a positioning point periodically (Step S101). Here, when the positioning point is calculated, the position information acquisition unit 101 acquires positioning accuracy information and a positioning time simultaneously (Step S102). The position information acquisition unit 101 sends the position information data 111 including the positioning point, the positioning accuracy information, and the positioning time to the behavior pattern extraction device 200 (Step S103).

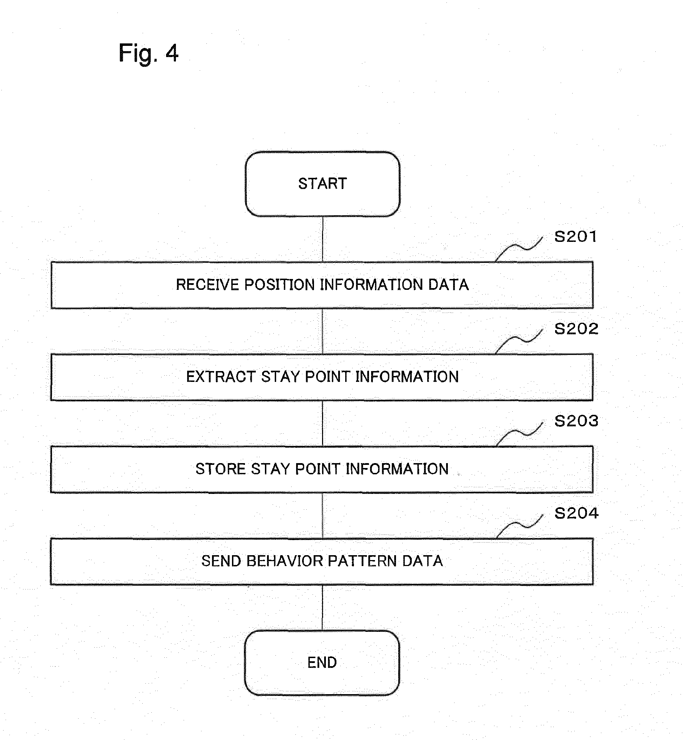

Next, an operation of the behavior pattern extraction device 200 according to the first exemplary embodiment of the present invention will be described. Fig. 4 is a flow chart showing behavior pattern extraction processing of the behavior pattern extraction device 200 according to the first exemplary embodiment of the present invention.

The behavior pattern extraction unit 201 of the behavior pattern extraction device 200 receives the position information data 111 from the terminal 100 (Step S201). The behavior pattern extraction unit 201 extracts the stay point information 212 from the position information data 111 sent from the terminal 100 (Step S202). The behavior pattern extraction unit 201 stores the extracted stay point information 212 in the behavior pattern storing unit 202 as the behavior pattern data 211 (Step S203). The behavior pattern extraction device 200, in response to an acquisition request of the behavior pattern data 211 received from the behavior characteristic extraction device 300, sends the behavior pattern data 211 to the behavior characteristic extraction device 300 (Step S204).

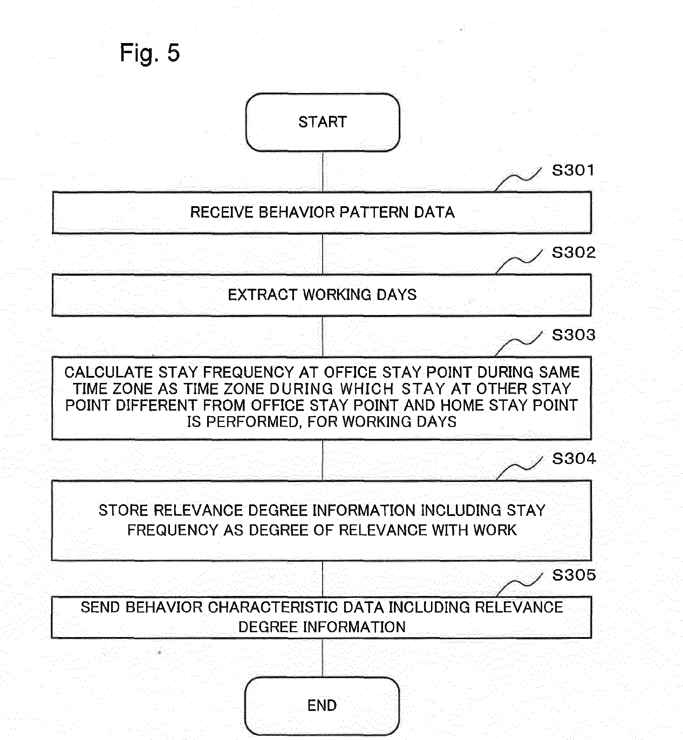

Next, an operation of the behavior characteristic extraction device 300 according to the first exemplary embodiment of the present invention will be described. Fig. 5 is a flow chart showing behavior characteristic extraction processing of the behavior characteristic extraction device 300 according to the first exemplary embodiment of the present invention.

First, the behavior pattern referring unit 301 of the behavior characteristic extraction device 300 receives the behavior pattern data 211 from the behavior pattern extraction device 200 (Step S301).

For example, the behavior pattern referring unit 301 receives the stay point information 212 shown in Fig. 6 as the behavior pattern data 211.

Here, the behavior characteristic extraction unit 302 acquires stay point identifiers of the home stay point and the office stay point based on the position information of a home and an office inputted in advance by the user or the administrator. For example, in the case that the inputted position (such as position coordinates, latitude and longitude) of the home exists within the predetermined range from a position of a stay point included in the stay point information 212, the behavior characteristic extraction unit 302 uses the stay point identifier of the stay point as the stay point identifier of the home stay point. Similarly, in the case that the inputted position of the office exists within the predetermined range from a position of a stay point included in the stay point information 212, the behavior characteristic extraction unit 302 uses the stay point identifier of the stay point as the stay point identifier of the office stay point.

For example, in case of the stay point information 212 shown in Fig. 6, the behavior characteristic extraction unit 302 acquires the stay point identifier s 1 of the home stay point and the stay point identifier s2 of the office stay point based on the position information of the home (position coordinates (x1, y1)) and position information of the office (position coordinates (x2, y2)) inputted by the administrator.

Note that, the behavior characteristic extraction unit 302 may acquire the stay point identifier of the home stay point and the office stay point by analyzing the stay point information 212. In this case, the behavior characteristic extraction unit 302 may, for example, use the stay point identifier of the stay point with the longest stay time as the stay point identifier of the home stay point, and use the stay point identifier of the stay point with the second longest stay time as the stay point identifier of the office stay point, based on the stay point information 212.

Next, the behavior characteristic extraction unit 302 extracts days on which a stay at the office stay point was performed as working days from the stay point information 212 received by the behavior pattern referring unit 301 (Step S302).

For example, the behavior characteristic extraction unit 302 extracts 3/15 to 19 and 3/22 to 26 as working days from the stay point information 212 shown in Fig. 6.

Next, the behavior characteristic extraction unit 302, referring to the stay point information 212, in the case that a stay at an other stay point different from the office stay point and the home stay point is performed on one of the working days, calculates a stay frequency at the office stay point during the same time zone as the time zone during which the stay at the other stay point is performed, for the stay data of the working days (Step S303). And the behavior characteristic extraction unit 302 sets the calculated stay frequency to a degree of relevance between the other stay point and work, and stores the relevance degree information 312 including the degree of relevance in the behavior characteristic storing unit 303 (Step S304).

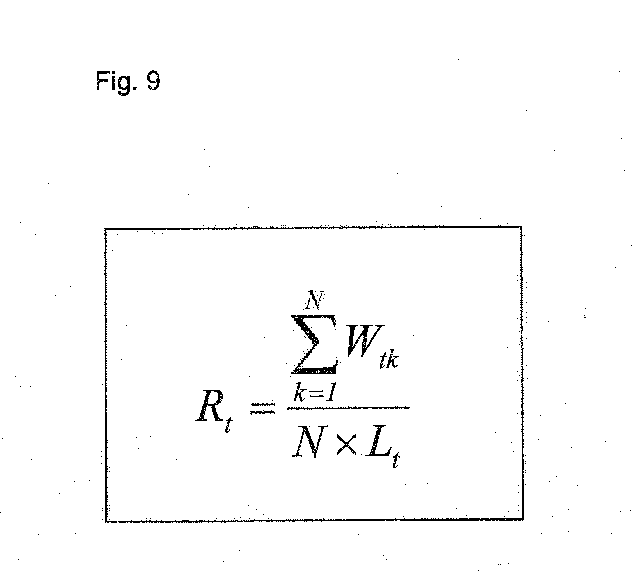

Fig. 9 is a diagram showing an example of an expression to calculate the degree of relevance (the stay frequency at the office stay point) according to the first exemplary embodiment of the present invention. Here, Rt shows the degree of relevance with work of a stay point at which a stay was performed during time zone t on a working day, Lt shows a time length of the time zone t, N shows a number of the working days included in the stay point information 212, and Wtk shows a stay time length at the office stay point on working day k (k=1 to N) and during the time zone t.

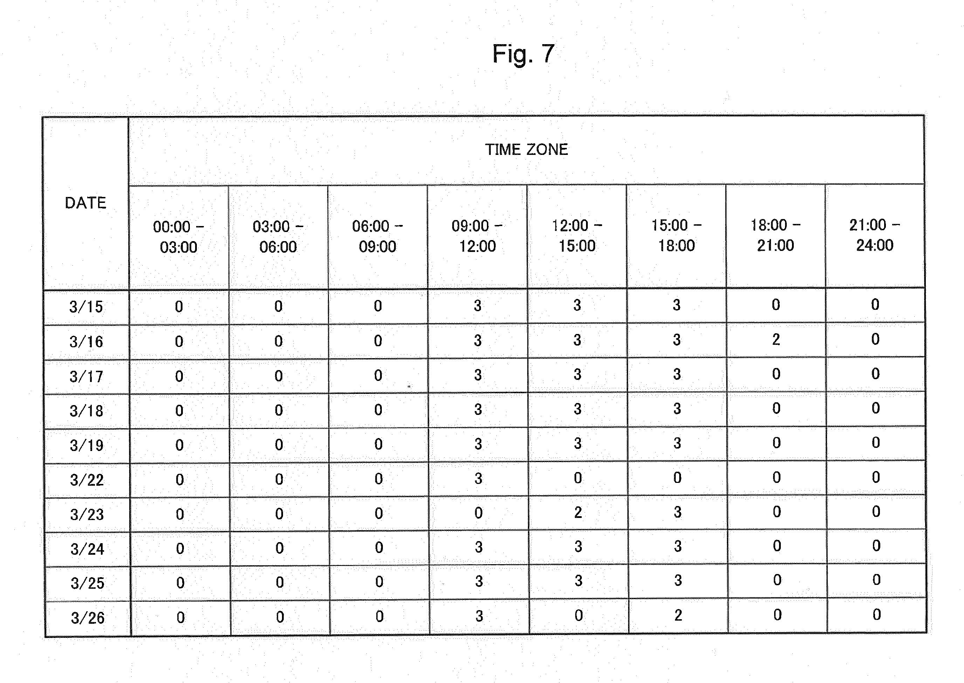

Fig. 7 is a diagram showing stay time lengths at the office stay point for respective time zones according to the first exemplary embodiment of the present invention. For example, in the case that the time zone for calculating the stay frequency is set every 3 hours like from 0:00 to 3:00, from 3:00 to 6:00, and from 6:00 to 9:00, the stay time lengths at the office stay point during respective time zones on the working days 3/15 to 19 and 3/22 to 26 included in the stay point information 212 shown in Fig. 6 are calculated as shown in Fig. 7.

On working days 3/15 to 19 and 3/22 to 26 included in the stay point information 212 shown in Fig. 6, stays at stay points with the stay point identifiers s3, s4, s5, s10 and s11, which are different from the office stay point (s2) and the home stay point (s1), are performed. The behavior characteristic extraction unit 302 calculates, for the stay point with the stay point identifier s3, the stay frequency at the office stay point during the time zone "from 15:00 to 18:00" during which the stay at the stay point was performed based on the stay time lengths during the time zone "from 15:00 to 18:00" shown in Fig. 7, using the expression shown in Fig. 9. As a result, the stay frequency of 0.87 is calculated. Similarly, the behavior characteristic extraction unit 302 also calculates, for the stay points with the stay point identifiers s4, s5, s10 and s11, the stay frequencies at the office stay point during the time zone "from 9:00 to 12:00", "from 12:00 to 15:00", "from 6:00 to 9:00" and "from 18:00 to 21:00", respectively. As a result, the stay frequencies of 0.90, 0.77, 0 and 0.07 are calculated respectively for the stay points with the stay point identifiers s4, s5, s10 and s11. And the behavior characteristic extraction unit 302 sets the calculated stay frequencies to the degree of relevance between the respective stay points and work, and outputs the relevance degree information 312 as shown in Fig. 8.

Note that, in the case that stays at a certain stay point are performed during a plurality of time zones, the behavior characteristic extraction unit 302 may calculate the stay frequencies at the office stay point for respective time zones and set the mean value of the stay frequencies to the degree of relevance with work.

Next, the behavior characteristic extraction unit 302, in response to an acquisition request of the behavior characteristic data 311 received from the behavior characteristic referring device 400, sends the behavior characteristic data 311 including the relevance degree information 312 to the behavior characteristic referring device 400 (Step S305).

Note that, the behavior characteristic extraction device 300 may carry out processing of Steps S301 to S305 periodically at a time interval set in advance or carry out it in response to an acquisition request of the behavior characteristic data 311 received from the behavior characteristic referring device 400.

After that, the behavior characteristic data 311 extracted by the behavior characteristic extraction unit 302 is used by the applications on the behavior characteristic referring device 400.

With that, the operation according to the first exemplary embodiment of the present invention is completed.

Note that, according to the first exemplary embodiment of the present invention, the behavior characteristic extraction system 1 calculates the degree of relevance between the user's stay point and the first behavior type ("work") (a first behavior type relevance degree), by defining "work" as the first behavior type and "private" as the second behavior type.

However, the behavior characteristic extraction system 1 may use other behavior types, as far as the user's behavior can be classified. For example, when the user is a student, the behavior characteristic extraction system 1 may calculate the degree of relevance between the user's stay point and "schoolwork", by defining "schoolwork" as the first behavior type and "private" as the second behavior type. In this case, the behavior characteristic extraction system 1 calculates the degree of relevance between the stay point and "schoolwork" by defining "school" as the first behavior base type and "home" as the second behavior base type.

Also, according to the first exemplary embodiment of the present invention, the behavior characteristic extraction unit 302 extracts days on which a stay at the office stay point was performed from the stay point information 212 as working days, and calculates the stay frequency at the office stay point for each time zone for the extracted working days.

However, the behavior characteristic extraction unit 302 may extract, from days on which a stay at the office stay point was performed, predetermined days of the week designated by the administrator and so on in advance, such as from Monday to Friday, as working days. Also, the behavior characteristic extraction unit 302 may calculate the stay frequency at the office stay point for each day of the week based on the stay point information 212, and may extract days of the week with the stay frequency exceeding a predetermined numerical value, as working days, from days on which a stay at the office stay point was performed. As a result, in the case that the user's usual (periodic) working days are specific days of the week in one week, it is possible to exclude stay data which includes the stay start time and the stay end time different from the usual working day such as stay data of an irregular working day like holiday on which work is performed, from a calculation target of the stay frequency at the office stay point for each time zone, and improve the calculation accuracy of the degree of relevance.

Next, a characteristic configuration of the first exemplary embodiment of the present invention will be described.

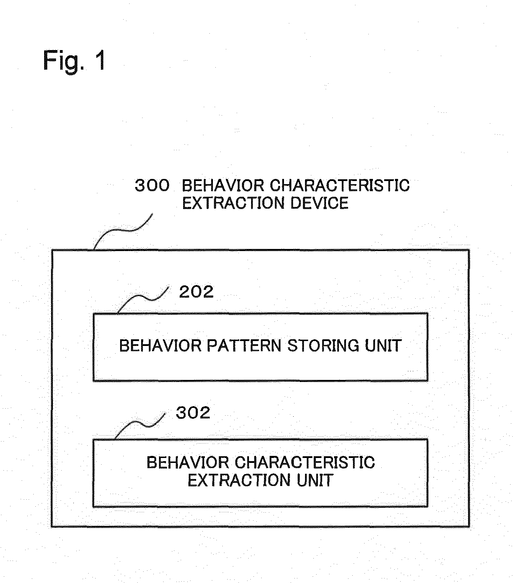

Fig. 1 is a block diagram showing a characteristic configuration according to the first exemplary embodiment of the present invention.

Referring to Fig. 1, a behavior characteristic extraction device 300 includes a behavior pattern storing unit 202 and a behavior characteristic extraction unit 302.

The behavior pattern storing unit 202 stores stay point information 212 including a stay point identifier which indicates a stay point, a stay start date and time, and a stay end date and time, for each of stays of a user at a plurality of stay points including a stay point of a first behavior base type corresponding to a first behavior type and a stay point of a second behavior base type corresponding to a second behavior type. The behavior characteristic extraction unit 302 extracts one or more days on which a stay at a stay point of the first behavior base type was performed as a day regarding the first behavior type by referring the stay point information 212 acquired from the behavior pattern storing unit 202, calculates, in the case that a stay at an other stay point different from the stay points of the first and the second behavior base type was performed on the one or more days regarding the first behavior type, a stay frequency at the stay point of the first behavior base type during the same time zone as a time zone during which the stay at the other stay point was performed, for the one or more days regarding the first behavior type, and determines and outputs a degree of relevance between the other stay point and the first behavior type based on the calculated stay frequency.

According to the first exemplary embodiment of the present invention, the relevance between the stay location and the behavior type of the user can be extracted from the position information history. The reason is because, the behavior characteristic extraction unit 302 extracts days on which a stay at the stay point of the first behavior base type was performed as days regarding the first behavior type by referring to the stay point information 212, and calculates, in the case that a stay at an other stay point different from the stay points of the first and the second behavior base type is performed on days regarding the first behavior type, the stay frequency at the stay point of the first behavior base type during the same time zone as the stay at the other stay point for the days regarding the first behavior type, and determines the degree of relevance between the other stay point and the first behavior type based on the calculated stay frequency. As a result, for example, information indicating whether the stay location of the user has relevance with work can be extracted from the position information history.

Also, according to the first exemplary embodiment of the present invention, the relevance between the stay location and the behavior type of the user can be extracted without regard to time zone during which the user performs the behavior corresponding to the behavior type. The reason is because, as stated above, the behavior characteristic extraction unit 302 calculates the stay frequency at the stay point regarding the first behavior base type during the same time zone as the stay at the other stay point, and determines the degree of relevance between the other stay point and the first behavior type based on the calculated stay frequency. As a result, for example, even in the case that time zones during which behavior is performed are different among the users, such as time zones for work, relevance between the user's stay location and work can be extracted.

### (Second exemplary embodiment)

Next, a second exemplary embodiment of the present invention will be described.

According to the second exemplary embodiment of the present invention, it differs from the first exemplary embodiment of the present invention at the point that the behavior characteristic extraction unit 302 extracts a periodic pattern which is a pattern in which working days on which a stay at the office stay point was performed (days regarding the first behavior type) and days, which are not the working days, on which a stay at the office stay point was not performed (days which is not the days regarding the first behavior type) appear in a plurality of days, and calculates the stay frequency at the office stay point for the days with the same order in the working days in the periodic pattern.

A configuration according to the second exemplary embodiment of the present invention is same as the configuration according to the first exemplary embodiment of the present invention.

Next, an operation of the behavior characteristic extraction system 1 according to the second exemplary embodiment of the present invention will be described.

The operation of the terminal 100 and the operation of the behavior pattern extraction device 200 according to the second exemplary embodiment of the present invention are same as the first exemplary embodiment of the present invention (Fig. 3 and Fig. 4).

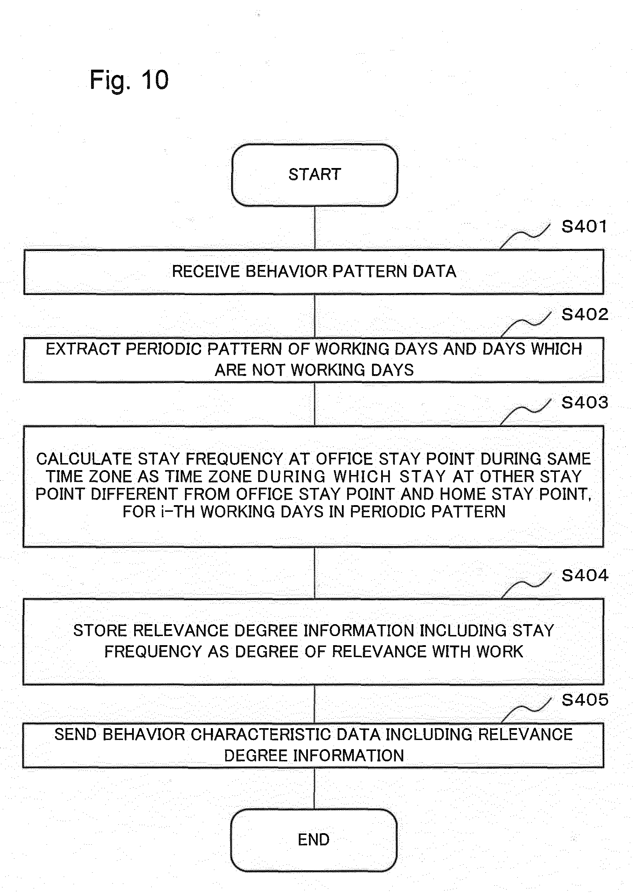

Next, the operation of the behavior characteristic extraction device 300 according to the second exemplary embodiment of the present invention will be described. Fig. 10 is a flow chart showing behavior characteristic extraction processing of the behavior characteristic extraction device 300 according to the second exemplary embodiment of the present invention.

First, the behavior pattern referring unit 301 of the behavior characteristic extraction device 300 receives the behavior pattern data 211 from the behavior pattern extraction device 200 (Step S401).

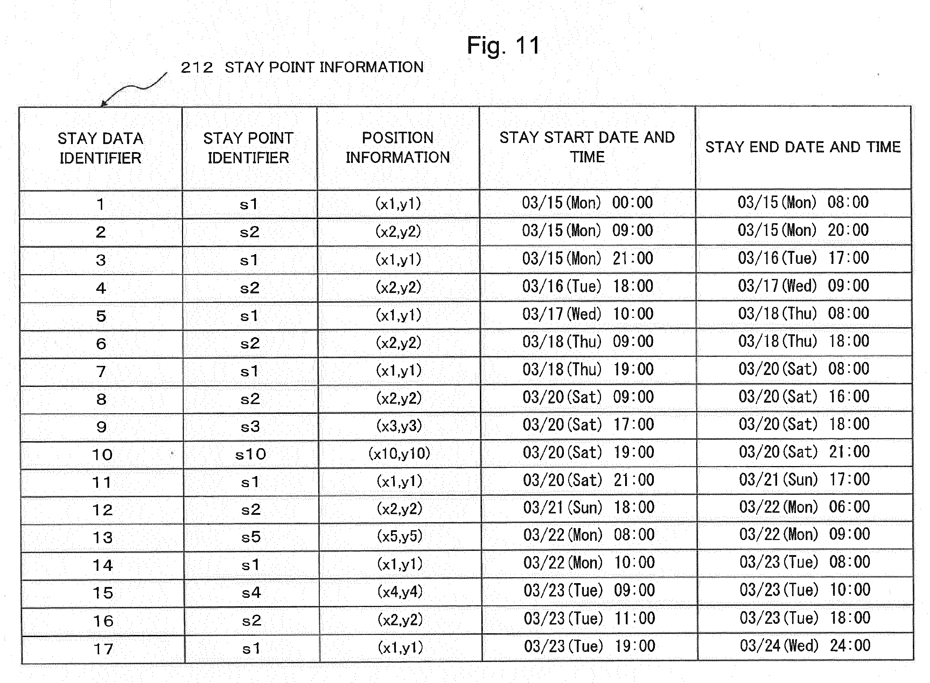

Fig. 11 is a diagram showing an example of the stay point information 212 according to the second exemplary embodiment of the present invention. For example the behavior pattern referring unit 301 receives the stay point information 212 shown in Fig. 11 as the behavior pattern data 211.

Next, the behavior characteristic extraction unit 302 extracts a periodic pattern of working days on which a stay at the office stay point was performed and days, which are not the working days, on which a stay at the office stay point was not performed, from the stay point information 212 received by the behavior pattern referring unit 301 (Step S402). Here, the behavior characteristic extraction unit 302 detects periodicity of a pattern including the number of one or more consecutive working days and the number of one or more consecutive days which are not the working days, and extracts the periodic pattern of the working days and the days which are not the working days.

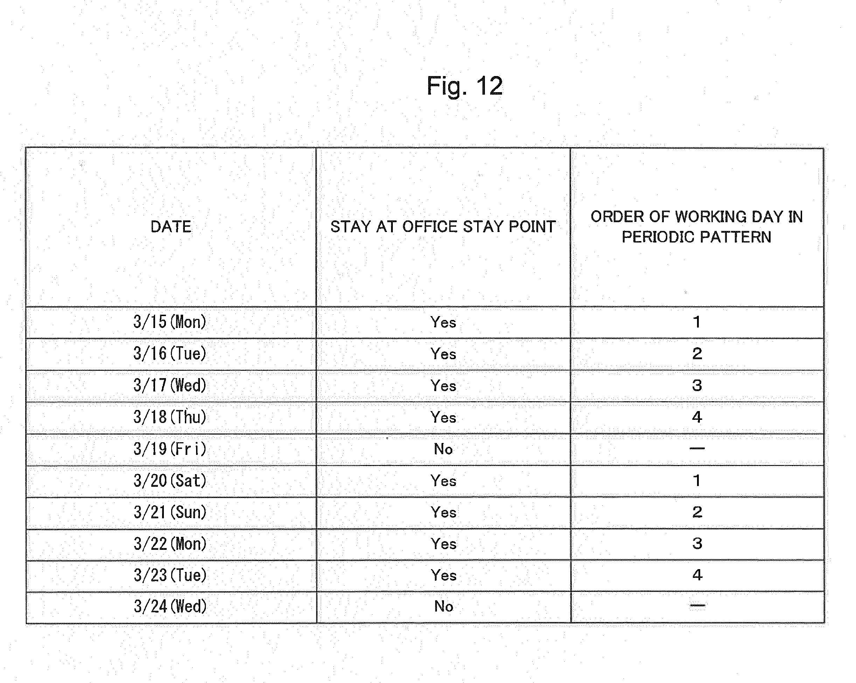

Fig. 12 is a diagram showing an example of the periodic pattern of working days according to the second exemplary embodiment of the present invention. For example, the behavior characteristic extraction unit 302 extracts the periodic pattern as shown in Fig. 12 from the stay point information 212 shown in Fig. 11. In the example shown in Fig. 12, the periodic pattern with a cycle of 5 days including working days (4 days) and a day which is not the working day (1day) is extracted.

Next, the behavior characteristic extraction unit 302, referring to the stay point information 212, in the case that a stay at an other stay point different from the office stay point and the home stay point is performed on one of the i-th (1 ≤ i ≤ the number of working days in the periodic pattern) working days in the periodic pattern, calculates the stay frequency at the office stay point during the same time zone as the time zone during which the stay at the other stay point is performed, for the stay data of the i-th working days in the periodic pattern (Step S403). And the behavior characteristic extraction unit 302 sets the calculated stay frequency to a degree of relevance between the other stay point and work, and stores the relevance degree information 312 including the degree of relevance in the behavior characteristic storing unit 303 (Step S404).

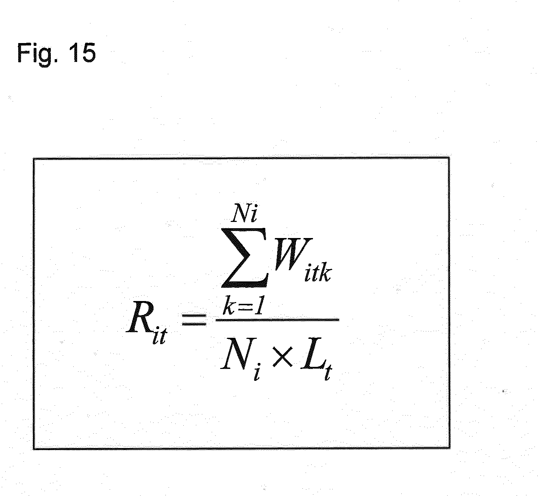

Fig. 15 is a diagram showing an example of an expression to calculate the degree of relevance (the stay frequency at the office stay point) according to the second exemplary embodiment of the present invention. Here, Rit shows the degree of relevance with work of a stay point at which a stay was performed during time zone t on one of the i-th working days in the periodic pattern of working days, Lt shows a time length of the time zone t, Ni shows a number of the i-th working days included in the stay point information 212, and Witk shows a stay time length at the office stay point on working day k (k=1 to Ni) of the i-th working days in the periodic pattern and during the time zone t.

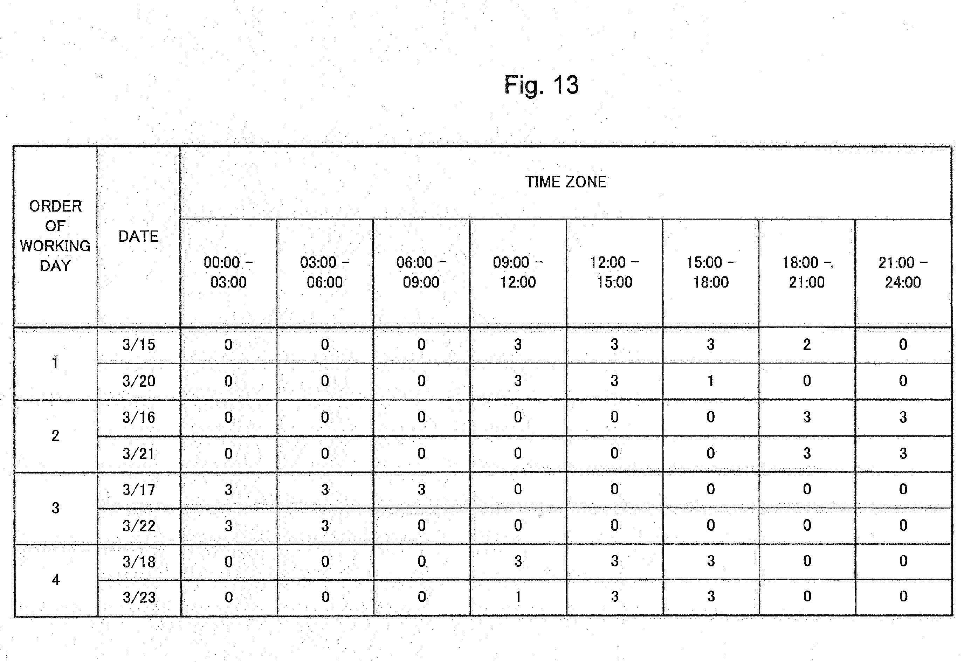

Fig. 13 is a diagram showing the stay time lengths at the office stay point for respective time zones according to the second exemplary embodiment of the present invention. For example, in the case that the periodic pattern as shown in Fig. 12 is extracted, the stay time lengths at the office stay point during respective time zones on the first working days (3/15 and 3/20), the second working days (3/16 and 3/21), the third working days (3/17 and 3/22) and the fourth working days (3/18 and 3/23) in the periodic pattern included in the stay point information 212 shown in Fig. 11 are calculated as shown in Fig. 13.

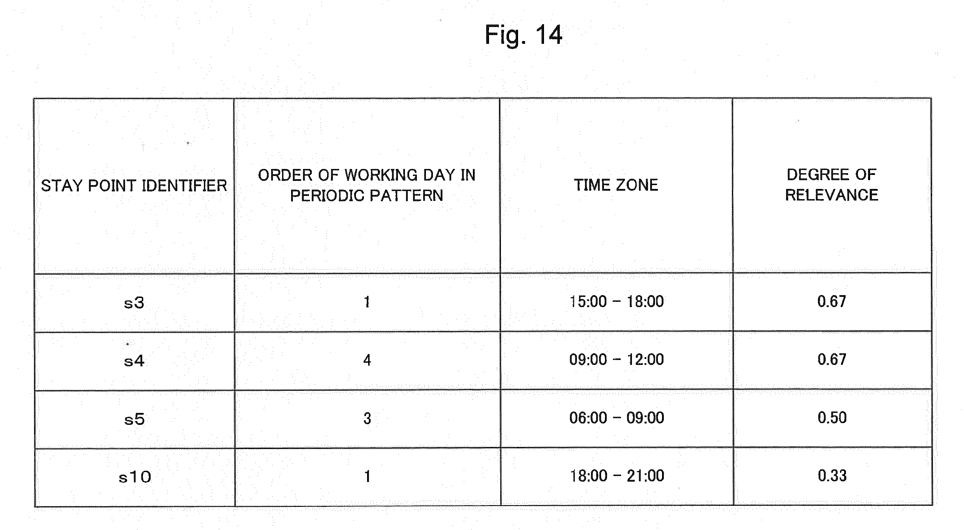

Fig. 14 is a diagram showing an example of the relevance degree information 312 according to the second exemplary embodiment of the present invention. On the first working days (3/15 and 3/20) in the periodic pattern included in the stay point information 212 shown in Fig. 11, a stay at a stay point with the stay point identifier s3, which is different from the office stay point (s2) and the home stay point (s1), is performed. The behavior characteristic extraction unit 302 calculates the stay frequency at the office stay point during the time zone "from 15:00 to 18:00" during which the stay at the stay point with the stay point identifier s3 was performed based on the stay time lengths during the time zone "from 15:00 to 18:00" on the first working days (3/15 and 3/20) shown in Fig. 7, using the expression shown in Fig. 15. As a result, the stay frequency of 0.67 is calculated. Similarly, the behavior characteristic extraction unit 302 also calculates, for the stay points with the stay point identifiers s4, s5 and s10, the stay frequencies at the office stay point during the time zone "from 9:00 to 12:00" on the fourth working days (3/18 and 3/23), the time zone "from 6:00 to 9:00" on the third working days (3/17 and 3/22), and the time zone "from 18:00 to 21:00" on the first working days (3/15 and 3/20), respectively. As a result, the stay frequencies of 0.67, 0.50 and 0.33 are calculated respectively, for the stay points with the stay point identifiers s4, s5 and s10. And the behavior characteristic extraction unit 302 sets the calculated stay frequencies to the degree of relevance between the respective stay point and work, and outputs the relevance degree information 312 as shown in Fig. 14.

Note that, in the case that stays at a certain stay point are performed during a plurality of time zones for the i-th working days in the periodic pattern, the behavior characteristic extraction unit 302 may calculate the stay frequencies at the office stay point for respective time zones for the i-th working days in the periodic pattern and set the mean value of the stay frequencies to the degree of relevance with work.

Next, the behavior characteristic extraction unit 302, in response to an acquisition request of the behavior characteristic data 311 received from the behavior characteristic referring device 400, sends the behavior characteristic data 311 including the relevance degree information 312 to the behavior characteristic referring device 400 (Step S405).

With that, the operation according to the second exemplary embodiment of the present invention is completed.

According to the second exemplary embodiment of the present invention, even in the case that the time zone during which the user performs behavior corresponding to the behavior type is different depending on days, the relevance between the stay location and the behavior type of the user can be extracted. The reason is because, the behavior characteristic extraction unit 302 extracts a periodic pattern which is a pattern in which days regarding the first behavior type and days which are not the days regarding the first behavior type appear in the plurality of days by referring to the stay point information 212, and in the case that a stay is performed at an other stay point on one of the i-th days regarding the first behavior type in the periodic pattern, calculates the stay frequency at the stay point of the first behavior base type during the same time zone as the time zone during which the stay at the other stay point is performed, for the i-th days of the first behavior type in the periodic pattern. As a result, even in the case that time zone during which work is performed by the user is different depending on days, as in the case that the user works shift, for example, relevance between the user's stay location and work can be extracted.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

For example, in the exemplary embodiments mentioned above, the behavior pattern extraction device 200 extracts the behavior pattern data 211 from the position information acquired by the terminal 100, and the behavior characteristic extraction device 300 extracts the behavior characteristic data 311 from the behavior pattern data 211. However, the behavior characteristic extraction device 300 may extract the behavior characteristic data 311 from the behavior pattern data 211 inputted manually.

This application is based upon and claims the benefit of priority from Japanese Patent Application No. 2010-174960, filed on August 4, 2010, the disclosure of which is incorporated herein in its entirety by reference.

### Industrial applicability

According to the present invention, it can be applied not only to an information delivery using the user's behavior characteristic but also to generating of user's probe data in market area research and traffic volume research.

### Reference Signs List

| | |
|---|---|
| 1 | Behavior characteristic extraction system |
| 100 | Terminal |
| 101 | Position information acquisition unit |
| 111 | Position information data |
| 200 | Behavior pattern extraction device |
| 201 | Behavior pattern extraction unit |
| 202 | Behavior pattern storing unit |
| 211 | Behavior pattern data |
| 212 | Stay point information |
| 300 | Behavior characteristic extraction device |
| 301 | Behavior pattern referring unit |
| 302 | Behavior characteristic extraction unit |
| 303 | Behavior characteristic storing unit |
| 311 | Behavior characteristic data |
| 400 | Behavior characteristic referring device |

## Claims

1. A behavior characteristic extraction device comprising:
behavior pattern storing means for storing stay point information including a stay point identifier which indicates a stay point, a stay start date and time, and a stay end date and time, for each of stays of a user at a plurality of stay points including a stay point of a first behavior base type corresponding to a first behavior type and a stay point of a second behavior base type corresponding to a second behavior type; and
behavior characteristic extraction means for extracting one or more days on which a stay at a stay point of said first behavior base type was performed as a day regarding said first behavior type by referring said stay point information acquired from said behavior pattern storing means, calculating, in the case that a stay at an other stay point different from said stay points of said first and said second behavior base type was performed on said one or more days regarding said first behavior type, a stay frequency at said stay point of said first behavior base type during the same time zone as a time zone during which said stay at said other stay point was performed, for said one or more days regarding said first behavior type, and determining and outputting a degree of relevance between said other stay point and said first behavior type based on said calculated stay frequency.

2. The behavior characteristic extraction device according to claim 1, wherein
said first behavior type is work or schoolwork, said first behavior base type is an office or a school, said second behavior type is private, and said second behavior base type is a home, and
said degree of relevance between said other stay point and said first behavior type becomes larger as said stay frequency at said stay point of said first behavior base type during the same time zone as said stay at said other stay point is increased.

3. The behavior characteristic extraction device according to claim 1 or 2, wherein
said behavior characteristic extraction means extracts a periodic pattern which is a pattern in which said one or more days regarding said first behavior type and one or more days which are not said day regarding said first behavior type appear within a plurality of days by referring to said stay point information acquired from said behavior pattern storing means, and calculates, in the case that a stay at said other stay point was performed on one or more i-th days corresponding to said one or more days regarding said first behavior type in said periodic pattern (1 ≤ i ≤ the number of said one or more days regarding said first behavior type in said periodic pattern), said stay frequency at said stay point of said first behavior base type during the same time zone as said stay at said other stay point, for said i-th days corresponding to said one or more days regarding said first behavior type in said periodic pattern.

4. The behavior characteristic extraction device according to claim 1 or 2, wherein
said behavior characteristic extraction means calculates a stay frequency at said stay point of said first behavior base type for each day of the week, and extracts one or more days corresponding to day of the week with said calculated stay frequency for each day of the week being equal to or greater than a predetermined value from said one or more days on which said stay at said stay point of said first behavior base type was performed as said day regarding said first behavior type.

5. A behavior characteristic extraction system comprising:
the behavior characteristic extraction device according to any one of claims 1 to 4; and
a behavior pattern extraction device for extracting said stay point information based on a positioning point indicating a position of said user and a positioning time, said extracted stay point information being stored by said behavior pattern storing means.

6. A behavior characteristic extraction method comprising:
storing stay point information including a stay point identifier which indicates a stay point, a stay start date and time, and a stay end date and time, for each of stays of a user at a plurality of stay points including a stay point of a first behavior base type corresponding to a first behavior type and a stay point of a second behavior base type corresponding to a second behavior type;
extracting one or more days on which a stay at a stay point of said first behavior base type was performed as a day regarding said first behavior type by referring said stay point information;
calculating, in the case that a stay at an other stay point different from said stay points of said first and said second behavior base type was performed on said one or more days regarding said first behavior type, a stay frequency at said stay point of said first behavior base type during the same time zone as a time zone during which said stay at said other stay point was performed, for said one or more days regarding said first behavior type; and
determining and outputting a degree of relevance between said other stay point and said first behavior type based on said calculated stay frequency.

7. A computer readable storage medium recording thereon a behavior characteristic extraction program, causing a computer to perform a method comprising:
storing stay point information including a stay point identifier which indicates a stay point, a stay start date and time, and a stay end date and time, for each of stays of a user at a plurality of stay points including a stay point of a first behavior base type corresponding to a first behavior type and a stay point of a second behavior base type corresponding to a second behavior type;
extracting one or more days on which a stay at a stay point of said first behavior base type was performed as a day regarding said first behavior type by referring said stay point information;
calculating, in the case that a stay at an other stay point different from said stay points of said first and said second behavior base type was performed on said one or more days regarding said first behavior type, a stay frequency at said stay point of said first behavior base type during the same time zone as a time zone during which said stay at said other stay point was performed, for said one or more days regarding said first behavior type; and
determining and outputting a degree of relevance between said other stay point and said first behavior type based on said calculated stay frequency.

8. The computer readable storage medium according to claim 7, recording thereon said behavior characteristic extraction program causing said computer to perform said method, wherein
said first behavior type is work or schoolwork, said first behavior base type is an office or a school, said second behavior type is private, and said second behavior base type is a home, and
said degree of relevance between said other stay point and said first behavior type becomes larger as said stay frequency at said stay point of said first behavior base type during the same time zone as said stay at said other stay point is increased.

9. The computer readable storage medium according to claim 7 or 8, recording thereon said behavior characteristic extraction program causing said computer to perform said method, wherein
when determining said degree of relevance,
extracting a periodic pattern which is a pattern in which said one or more days regarding said first behavior type and one or more days which are not said day regarding said first behavior type appear within a plurality of days by referring to said stay point information, and
calculating, in the case that a stay at said other stay point was performed on one or more i-th days corresponding to said one or more days regarding said first behavior type in said periodic pattern (1 ≤ i ≤ the number of said one or more days regarding said first behavior type in said periodic pattern), said stay frequency at said stay point of said first behavior base type during the same time zone as said stay at said other stay point, for said i-th days corresponding to said one or more days regarding said first behavior type in said periodic pattern.

10. The computer readable storage medium according to claim 7 or 8, recording thereon said behavior characteristic extraction program causing said computer to perform said method, wherein
when extracting said one or more days regarding said first behavior type,
calculating a stay frequency at said stay point of said first behavior base type for each day of the week, and
extracting one or more days corresponding to day of the week with said calculated stay frequency for each day of the week being equal to or greater than a predetermined value from said one or more days on which said stay at said stay point of said first behavior base type was performed as said day regarding said first behavior type.
